# EUROPEAN PATENT SPECIFICATION

(11) **EP 1 821 531 B1**
(45) Date of publication and mention of the grant of the patent: **06.04.2011**
(21) Application number: 07102377.4
(22) Date of filing: 14.02.2007
(51) Int. Cl.: H04N 5/46, H04N 5/445

(54) **Broadcast-receiving device and method for displaying menu**
Rundfunkempfangsvorrichtung mit Menüanzeigeverfahren
Dispositif de réception de diffusion et procédé pour afficher un menu

(30) Priority: 16.02.2006 JP 2006039657
(43) Date of publication of application: 22.08.2007
(73) Proprietor: Sony Corporation, Minato-ku Tokyo (JP)
(72) Inventor: Nebashi, Akira, Tokyo (JP); Mori, Yasunori, Tokyo (JP); Hayakawa, Hiroshige, Tokyo (JP)
(74) Representative: Melzer, Wolfgang

(56) References cited:
- EP-A- 1 587 313
- EP-A1- 1 014 714
- US-A1- 2002 113 896
- US-A1- 2004 100 585
- US-A1- 2004 158 874

## Description

### BACKGROUD OF THE INVENTION

### 1. Field of the Invention

The present invention relates to broadcast-receiving device and a method for displaying a menu on the broadcast-receiving device.

### 2. Description of Related Art

In recent years, in a television broadcast, digitalization has progressed in order to provide high quality images, high quality sounds, and various kinds of pieces of information. As the digitalization in the television broadcast progresses, broadcast-receiving device for receiving the television broadcast is provided with not only a function of receiving an analog broadcast signal but also a function of receiving a digital broadcast signal.

For example, Japanese Patent Application Publication No. 2004-320449 has disclosed broadcast-receiving device which is provided with a function of receiving both of the analog broadcast signal and the digital broadcast signal. In this publication, when an identical program is available in both of the analog broadcast and the digital broadcast, the broadcast-receiving device informs a user that the digital broadcast is available and when the analog broadcast terminates, a message is displayed to advice the user to shift the analog broadcast channel to the digital broadcast channel, or such a shift will be automatically made.

By the way, in the case where broadcast-receiving device having a function of receiving both of the analog broadcast signal and the digital broadcast signal is used in a region where the digital broadcast is not available, if the menu related to the function of receiving the analog broadcast signal and the digital broadcast signal that the broadcast-receiving device has is displayed, the display related to the unavailable broadcast also appears. This causes the manipulation of the broadcast-receiving device to be complicated and hard to understand. Similarly, when the broadcast-receiving device is used in the region where the analog broadcast has already terminated, the display related to the unavailable analog broadcast also appears. This also causes the manipulation of the broadcast-receiving device to be complicated and hard to understand.

A broadcast-receiving device in which all features of the precharacterizing part of claim 1 are disclosed, is described in EP-A-1 587 313.

Further, there is known from US-A-2004/010085 a broadcast-receiving device having an analog tuner for receiving analog broadcasting and a digital tuner for receiving digital broadcasting, in which, when a user views a program of analog broadcasting and the same program is being broadcast in digital broadcasting, a message that the same program is being broadcast in digital broadcasting is displayed on a screen.

### SUMMARY OF THE INVENTION

It is an object of the present invention to provide broadcast-receiving device and a method for displaying a menu, that allow the user to operate the broadcast-receiving device easily even if the broadcast-receiving device is provided with any functions to receive the analog broadcast and the digital broadcast.

This object is achieved by a broadcast-receiving device and a method for displaying a menu according to the enclosed independent claims. Advantageous features of the present invention are defined in the corresponding subclaims.

The concluding portion of this specification particularly points out and directly claims the subject matter of the present invention. However, those skilled in the art will best understand both the organization and method of operation of the invention, together with further advantages and objects thereof, by reading the remaining portions of the specification in view of the accompanying drawing(s) wherein like reference characters refer to like elements.

### BRIEF DESCRIPTION OF THE DRAWINGS

Fig. 1 is a functional block diagram for showing a configuration of an embodiment of a broadcast-receiving device according to the invention;
Fig. 2 is a diagram for showing an appearance of a remote controller;
Fig. 3 is a flow chart for illustrating operations of setting a menu display;
Fig. 4 is a diagram for showing a language selectionmenu screen;
Fig. 5 is a diagram for showing a country selectionmenu screen;
Fig. 6 is a diagram for showing broadcast scheme information;
Figs. 7A and 7B are diagrams each for showing a top menu screen;
Figs. 8A and 8B are diagrams each for showing a setting menu screen;
Fig. 9 is a diagram for showing a setting menu screen (in the case where a set-up mode is selected);
Fig. 10 is a flow chart for illustrating an operation of setting a menu display (in the case where a simultaneous broadcast mode is provided);
Fig. 11 is a diagram for showing a top menu screen (in the case where the simultaneous broadcast mode is selected); and
Fig. 12 is a diagram for showing a setting menu screen (in the case where the simultaneous broadcast mode is selected).

### DETAILED DESCRIPTION OF THE PREFERRED EMBODIMENTS OF THE INVENTION

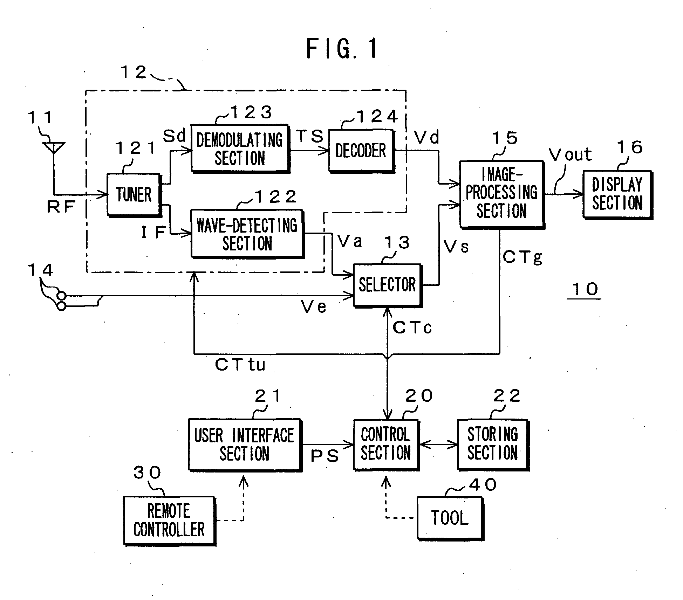

The following will describe embodiments of the present invention with reference to the drawings. Fig. 1 is a functional block diagram of a broadcast-receiving device 10. In Fig. 1, only function blocks to be used in displaying the images of the broadcast contents are illustrated, and an illustration of any function blocks related to the acoustic outputs will be omitted. In the following description, any descriptions related to the acoustic outputs will be also omitted.

In the broadcast-receiving device 10, a received signal RF obtained through an antenna 11 is supplied to a broadcast-receiving section 12. The broadcast-receiving section 12 executes operations such as a channel selection based on a channel selection signal CTtu received from a later-described control section 20. When the broadcast-receiving section 12 receives an analog broadcast signal, it supplies an image signal Va of the selected channel to a selector 13. When the broadcast-receiving section 12 receives a digital broadcast signal, it supplies an image signal Vd of the selected channel to an image-processing section 15.

When an analog broadcast channel is designated by a channel selection signal CTtu received from a later-described control section 20, a tuner 121 in the broadcast-receiving section 12 selects the signal of the designated channel from the received signal RF to generate an intermediate frequency signal IF, and supplies the resultant intermediate frequency signal IF to a wave-detecting section 122. Further, when a digital broadcast channel (i.e. a physical channel) is designated by the channel select signal CTtu, the tuner 121 selects the signal of the designated channel from the received signal RF to generate a base band IQ signal Sd, and supplies the resultant base band IQ signal Sd to a demodulating section 123.

The wave-detecting section 122 detects the waves of the intermediate frequency signal IF to generate an image signal Va, and supplies the resultant image signal Va to a selector 13. The demodulating section 123 executes digital demodulation, error correction, deinterleaving, descrambling and the like to the base band IQ signal Sd in correspondence with the television broadcast scheme to generate a transport stream TS, and supplies the resultant transport stream TS to a decoder 124. The decoder 124 filters the transport stream TS to extract packets of various kinds of pieces of control information and packets of the program to be selected. Further, the decoder 124 also decodes the extracted image data to generate an image signal Vd, and supplies the resultant image signal Vd to an image-processing section 15.

To the selector 13, external input terminals 14 for inputting an image signal Ve from external device into the broadcast-receiving device 10 is connected. The selector 13 chooses the image signal Va received from the broadcast-receiving section 12 or the image signal Ve received through the external input terminal 14, based on a selection signal CTc received from the control section 20, and supplies the chosen image signal Vs to the image-processing section 15.

The image-processing section 15 adjusts the image quality, contrast, brightness, color density, hue, and the like of the image signal Vs received from the selector 13 or the image signal Vd received from the decoder 124. The image-processing section 15 also executes any processing such as IP convention or converting the image signal in an interlacing mode into an image signal in a progressive mode in correspondence with an image format treatable in a later-described display section 16, and scaling for adjusting the number of pixels, and the like. The image-processing section 15 further generates a menu signal for displaying a menu, and based on the menu signal and/or an image signal, generates an image display signal Vg and supplies the resultant image display signal Vg to the display section 16. For example, the image-processing section 15 generates the image display signal Vg using the menu signal instead of an image signal, so as to switch the broadcast contents screen into the menu screen. Alternatively, the image-processing section 15 executes so-called alpha-blend processing to the image signal with the menu signal to generate the image display signal Vg, so as to allow the menu screen to semi-transparently appear on the broadcast contents screen. Further the image-processing section 15 generates an information display signal for displaying information such as an electronic program guide and the like, and generates the image display signal Vg based on this information display signal. It is to be noted that the image-processing section 15 generates the menu signal and the information display signal in response to any instructions based on a control signal CTg received from the control section 20.

The display section 16 is constituted by a display element such as a liquid crystal display element, a plasma display, a negative electrode tube, or the like. The display section 16 drives the display element based on the image display signal Vg received from the image-processing section 15 to allow the display element to display the broadcast contents images, various kinds of menu screens, and electronic program guides, and the like.

To the control section 20, a user interface section 21 is connected. The user interface section 21 is constituted by a remote-control-signal-receiving section for receiving a signal from a remote controller 30 and manipulating buttons. When the user manipulates any one of the manipulating buttons, the user interface section 21 supplies a manipulating signal PS corresponding to the manipulated button to the control section 20. When the user interface section 21 receives a remote control signal from the remote controller 30, it supplies the received remote control signal to the control section 20 as a manipulating signal PS.

To the control section 20, a storing section 22 constituted by a nonvolatile memory and the like is connected. The storing section 22 stores programs for operating the broadcast-receiving device. The storing section 22 also stores information indicative of set-up states based on the manipulation by the user and various adjustment states executed during the steps of manufacturing the broadcast-receiving device as setting information thereof. The storing section 22 also stores information obtained as a result of receiving digital broadcast, for example, channel select information for selecting a program of a desired channel and program information for enabling an electronic program guide to be displayed.

The control section 20 executes any programs stored in the storing section 22. Then, based on the various kinds of pieces of information stored in the storing section 22 or the manipulating signal PS received from the user interface section 21, the control section 20 generates the channel selection signal CTtu, a selecting signal CTc, and a control signal CTg to control the broadcast-receiving device to operate in correspondence with the usermanipulation. To the control section 20, a tool 40 having a function of rewriting programs and information stored in the storing section 22 is connectable.

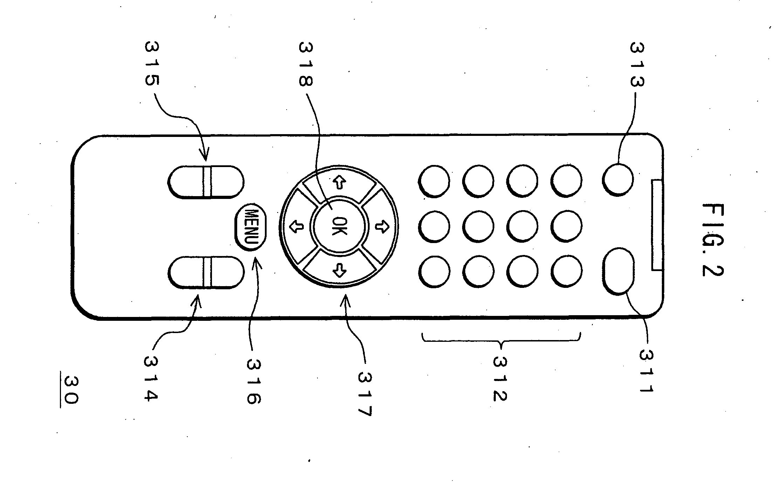

Fig. 2 illustrates an exemplary appearance of a remote controller 30 for switching the operations of the broadcast-receiving device 10 from a remote location. The remote controller 30 includes buttons to which various functions and the like are individually allocated. For example, the buttons include: a power supply button 311 allocated with a function for turning on/off the power supply; a group of number buttons 312 allocated with channels; an input switch button 313; a channel button 314 allocated with a channel up/down function; and a sound volume button 315 allocated with a sound volume up/down function. The buttons also include a menu button 316 for allowing a menu display to appear, an up/down and left/right button 317 for selecting and switching items when a menu is displayed, and an OK button 318.

In the broadcast-receiving device 10 thus configured, the menu is set to display the contents corresponding to the analog broadcast mode or the digital broadcast mode that is currently available, whereas not to display unavailable menu items. This enables the broadcast-receiving device to enhance its operability.

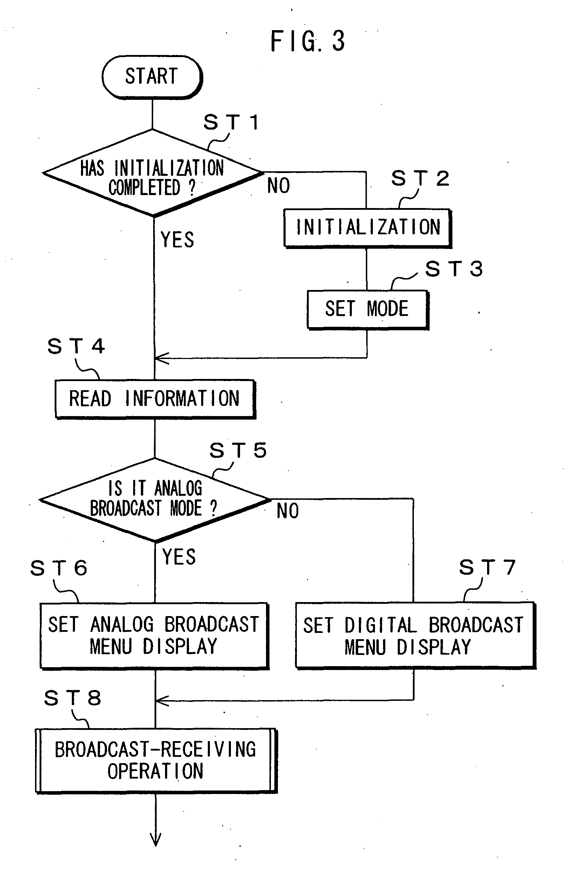

Fig. 3 is a flow chart for illustrating operations of setting the menu display. In Step ST1, the control section 20 determines whether or not the initialization for the broadcast-receiving device has already been completed. In this case, if it is the first time for the user to use the broadcast-receiving device, the user setting is not still made. Therefore, the control section 20 proceeds to Step ST2 to execute initialization. When the broadcast-receiving device 10 operates after the completion of the initialization, the control section 20 proceeds to Step ST4 because the initialization has already been completed.

In Step ST2, the control section 20 executes initialization. The control section 20 controls the image-processing section 15 to allow the display section 16 to display the initialization menu screen. Further, the control section 20 switches the menu screen based on the manipulating signal. Further, upon completion of the setting for the individual menu items based on the manipulating signal, the control section 20 controls the storing section 22 to store the information indicative of the set-up state as information set by the user.

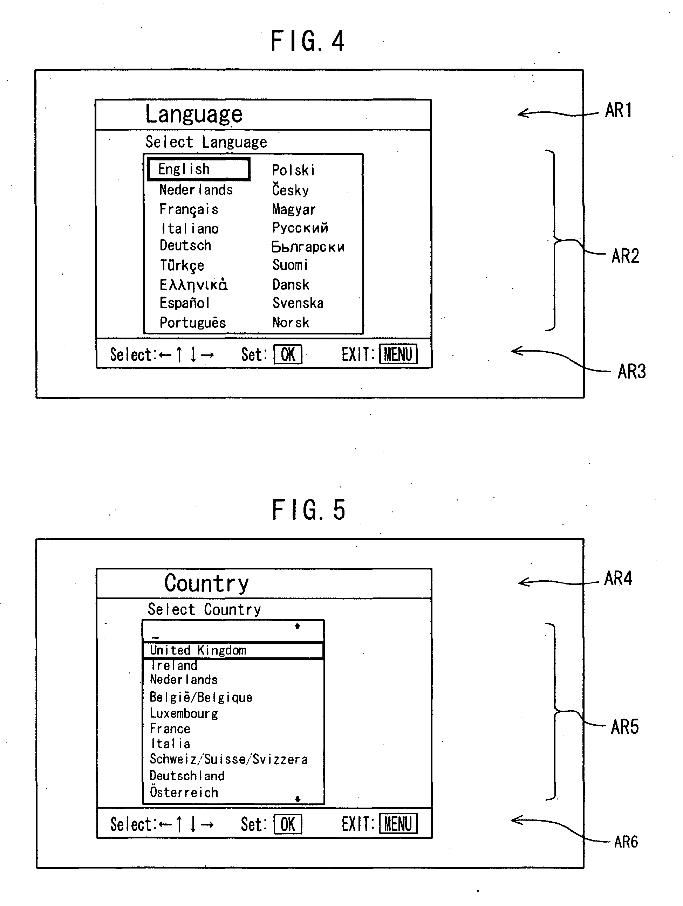

The control section 20 controls the image-processing section 15 to allow the display section 16 to initially display, for example, a language selection menu screen as an initialization menu screen. Fig. 4 illustrates the language selection menu screen. On the language selection menu screen, a title of the menu is displayed in a display area AR1, selectable languages are displayed in a display area AR2, and manipulation methods are displayed in a display area AR3. When the user manipulates the up/down and left/right button 317 on the remote controller 30, the control section 20 designates the language in correspondence with his or her manipulation, and provides the display of the designated language in a manner different from the remaining languages. For example, the control section 20 provides the display of the designated language in a color different from the other languages, in an inverted state, or pointed out by a cursor. Further, the control section 20 determines the language which has been designated when the OKbutton 318 has beenmanipulated as the selected language, and controls the storing section 22 to store the information indicative of the selected language.

Next, the control section 20 controls the image-processing section 15 to allow the display section 16 to display a country selection menu screen. Fig. 5 illustrates a country selection menu screen. On the country selection menu screen, a title of the menu is displayed in a display area AR4, selectable country names are displayed in a display area AR5, and manipulation methods are displayed in a display area AR6. When the user manipulates the up/down and left/right button 317 on the remote controller 30, the control section 20 designates the country name in correspondence with his or her manipulation, and provides the display of the designated country name in a manner different from the remaining country names. For example, the control section 20 provides the display of the designated country name in a color different from the other country names, in an inverted state, or pointed out by a cursor. Further, the control section 20 determines the country name which has been designated when the OK button 318 has beenmanipulated as the selected country, and controls the storing section 22 to store the information indicative of the selected country.

Upon completion of the selection of the country, the control section 20 controls the image-processing section 15 to allow the display section 16 to display a menu screen (not shown) indicative of whether or not a receivable channel is to automatically set. When the automatic setting is selected, the control section 20 automatically detects a receivable channel, and controls the storing section 22 to store the result of the detection. Then, the control section 20 terminates the initialization. When the automatic setting is not selected, the control section 20 terminates the initialization.

In Step ST3 in Fig. 3, the control section 20 chooses between an analog broadcast mode in which the operation is set to control the broadcast-receiving section 12 and the image-processing section 15 in correspondence with the analog broadcast, and a digital broadcast mode in which the operation is set to control the broadcast-receiving section 12 and the image-processing section 15 in correspondence with the digital broadcast. Then, the control section 20 controls the storing section 22 to store the chosen result thereof.

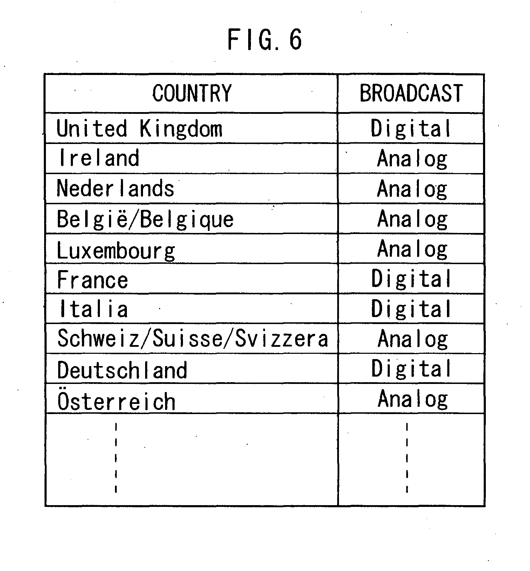

At this time, the storing section 22 stores beforehand the broadcast scheme information indicative of the information whether the broadcast is analog broadcast or digital broadcast for each receiving region. For example, as shown in Fig. 6, the storing section 22 stores beforehand the broadcast scheme information indicative of whether the broadcast is analog broadcast or digital broadcast for each country. Based on thus-stored broadcast scheme information, when the control section 20 determines that digital broadcast is not available in the selected country, the control section 20 selects an analog broadcast mode. Contrarily, when the control section 20 determines that digital broadcast is available in the selected country, the control section 20 selects a digital broadcast mode. For example, when the country name "Netherlands" is selected, since digital broadcast is not available in this country, the control section 20 selects an analog broadcast mode in such a manner that an analog broadcast signal is received to enable the images of the broadcast contents to be displayed. Contrarily, when the country name "United Kingdom" is selected, the control section 20 selects a digital broadcast mode in such a manner that a digital broadcast signal is received to enable images of the broadcast contents to be displayed. It is to be noted that the setting of the receiving region is not limited to units of countries. If the initiation of the digital broadcast differs from regions in the same country, the mode selection may be made in correspondence with the broadcast scheme of the selected region using the broadcast scheme information indicative of the broadcast scheme for each region. Alternatively, the mode selection may be manually set by the user. For example, a menu screen for mode choice is displayed and the user then manipulates the remote controller 30 and the like to choose the modes.

In Step ST4, the control section 20 reads the information stored in the storing section 22, and proceeds to Step ST5. In Step ST5, based on the read information, the control section 20 determines whether or not the analog broadcast mode is selected. If the analog broadcast mode is selected, the control section 20 proceeds to Step ST6. Contrarily, if the analog broadcast mode is not selected, that is, if the digital broadcast mode is selected, the control section 20 proceeds to Step ST7.

In Step ST6, the control section 20 executes the menu display setting for the analog broadcast mode in such a manner that the menu for the analog broadcast mode appears, and proceeds to Step ST8. In Step ST7, the control section 20 executes the broadcast menu display setting in such a manner that the menu in correspondence with the digital broadcast mode appears, and proceeds to Step ST8.

In the Step ST8, the control section 20 executes an operation of receiving broadcast to allow the display section 16 to display the images of the broadcast contents designated by the user. In these operations of receiving the broadcast, if the analog broadcast mode has been selected, the control section 20 controls the broadcast-receiving section 12 and the image-processing section 15 to set their operations in correspondence with the analog broadcast. For example, when the user manipulates the channel button 314 of the remote controller 30, the control section 20 sequentially selects the analog broadcast programs. If the digital broadcast mode has been selected, the control section 20 controls the broadcast-receiving section 12 and the image-processing section 15 to set their operations in correspondence with the digital broadcast. For example, when the user manipulates the channel button 314 of the remote controller 30, the control section 20 sequentially selects the digital broadcast programs.

In these broadcast-receiving operations, when the user manipulates the menu display by manipulating, for example, the menu button 316 of the remote controller 30, the control section 20 executes a control to display a menu screen corresponding to the menu display setting.

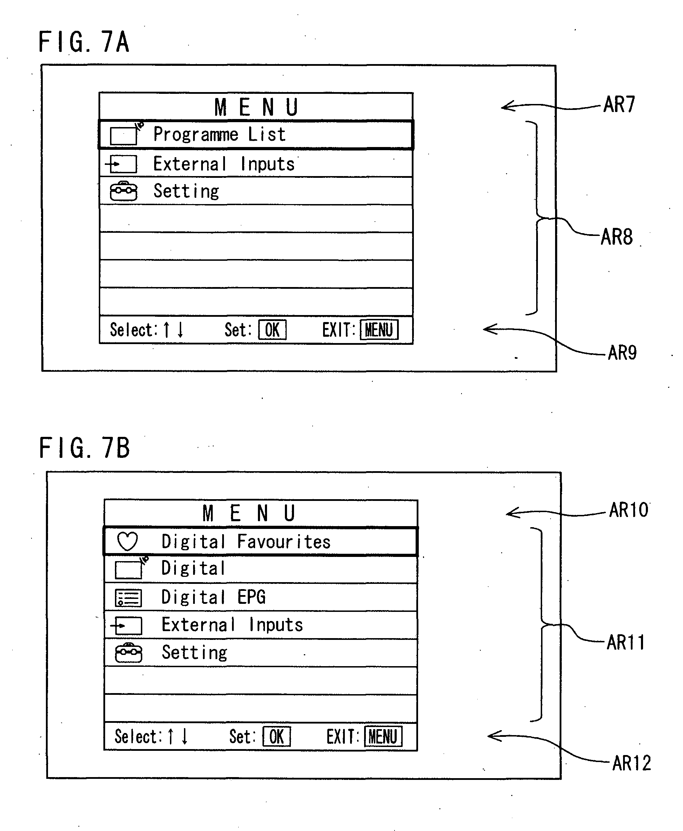

Figs. 7A and 7B respectively show a top menu screen which initially appears in response to the manipulation of displaying the menu. At this time, when the user chooses the analog broadcast mode, the control section 20 controls the broadcast-receiving section 12 and the image-processing section 15 to allow the display section 16 to display the top menu screen shown in Fig. 7A. Contrarily, when the user chooses the digital broadcast mode, the control section 20 controls the broadcast-receiving section 12 and the image-processing section 15 to allow the display section 16 to display the top menu screen shown in Fig. 7B.

On the top menu screen shown in Fig. 7A, a title of the menu is displayed in a display area AR7, menu items are displayed in a display area AR8, and manipulation methods are displayed in a display area AR9. Further, only the menu items related to the reception of the analog broadcast are displayed. For example, "Programme List" is a menu item for displaying the analog broadcast channel list. "External Inputs" is a menu item for selecting the image signal inputted from the external input terminals 14 by the selector 13. "Setting" is a menu item for allowing a setting menu screen for making various settings to be displayed.

On the topmenu screen of Fig. 7B, a title of the menu is displayed in a display area AR10, menu items are displayed in a display area AR11, and manipulation methods are displayed in a display area AR12. Further, the menu items related to the reception of the analog broadcast and the digital broadcast are displayed. For example, "Digital Favourites" is a menu item for displaying a favorite channel list of the digital broadcast. "Digital" is a menu item for selecting a channel of the digital broadcast. "Digital EPG" is a menu item for displaying an electronic program guide of the digital broadcast. "External Inputs" is a menu item for selecting the image signal inputted from the external input terminals 14 by the selector 13. "Setting" is a menu item for allowing a setting menu screen for making various settings to be displayed.

In the manner as described above, when the user chooses the analog broadcast mode, the control section 20 executes a control to display a top menu screen corresponding to the analog broadcast. Contrarily, when the user chooses the digital broadcast mode, the control section 20 executes a control to display a top menu screen corresponding to the digital broadcast.

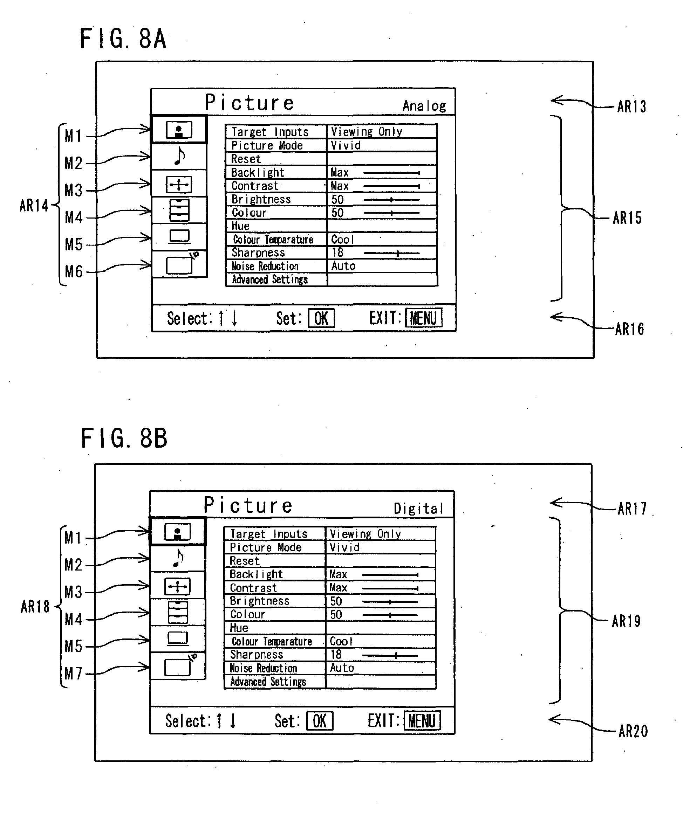

Further, the menu screen switched in correspondence with the modes is not limited to the top menu screen. The menu items selected on the top menu screen are also switched in correspondence with the modes. Figs. 8A and 8B respectively show a setting menu screen that appears when the menu item "Settings" is selected on the top menu screen.

When the user selects the analog broadcast mode, the control section 20 controls the broadcast-receiving section 12 and the image-processing section 15 to allow the display section 16 to display the setting menu screen shown in Fig. 8A. Contrarily, when the user selects the digital broadcast mode, the control section 20 controls the broadcast-receiving section 12 and the image-processing section 15 to allow the display section 16 to display the setting menu screen shown in Fig. 8B.

On the setting menu screen of Fig. 8A, a title of the menu is displayed in a display area AR13, menu items are displayed in a display area AR14, various setting details of the selected menu items are displayed in a display area AR15, and manipulation methods are displayed in a display area AR16. Further, items related to the matters other than the broadcast reception and items related to the analog broadcast reception are displayed as menu items. For example, the menu items M1 to M5 are items related to the matters other than the broadcast reception. Specifically, the menu item M1 is an item for setting an image quality mode. The menu item M2 is an item for setting a sound quality mode. The menu item M3 is an item for setting a screen mode such as a wide screen. The menu item M4 is an item for selecting a set-up mode for use in making various settings. The menu item M5 is an item for selecting a PC input mode to connect a personal computer as an external input. The menu item M6 is an item for selecting an analog broadcast setting screen for use in setting an analog broadcast channel.

On the setting menu screen of Fig. 8B, a title of the menu is displayed in a display area AR17, menu items are displayed in a display area AR18, various setting details of the selected menu items are displayed in a display area AR19, and manipulation methods are displayed in a display area AR20 . Further, items related to the matters other than the broadcast reception and items related to the digital broadcast reception are displayed as menu items. For example, the menu items M1 to M5 are items related to the matters other than the broadcast reception as described above. The menu item M7 is an item for selecting a digital broadcast setting screen for use in setting digital broadcast channels, and the like.

Figs . 8A and 8B respectively show a state where the menu item M1 for setting an image quality mode is selected. In the display areas AR15 and AR19, backlight (in the case of using a liquid crystal display device), contrasts, brightness, and color of the image and the like are displayed as the contents to be set.

Thus, by selecting either one of the analog broadcast mode or the digital broadcast mode in correspondence with the broadcast scheme in the region where the broadcast-receiving device is used, the menu items related to unavailable broadcast are not displayed. As a result, various settings can be facilitated.

The mode may be changed after the use of the broadcast-receiving device has been started. For example, when the set-up mode in the menu item M4 is selected, switching between the analog broadcast mode and the digital broadcast mode is enabled in this set-up mode.

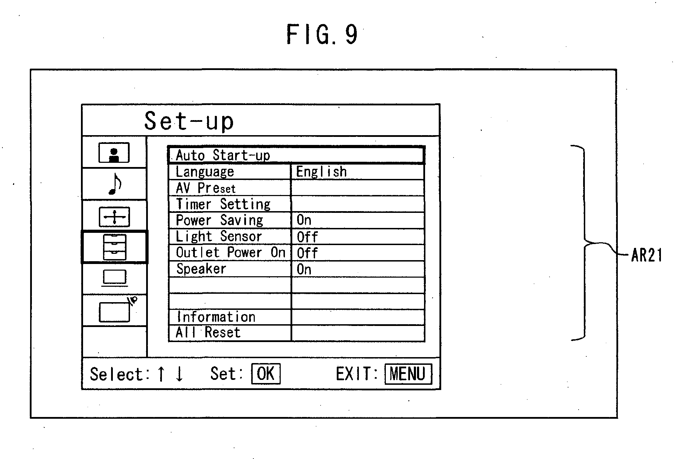

Fig. 9 shows a setting menu screen in the case where the set-up mode is selected. The contents of settings to be displayed in a display area AR21 include "Auto Start-up". The "Auto Start-up" executes a processing equivalent to the initialization described above. When the OK button 318 is manipulated with the "Auto Start-up" designated, a language selection menu screen is displayed to enable selection of another language. Further, a country selection menu screen is displayed to enable selection of another country name. In this manner, even if the region where the broadcast-receiving device is used is changed to another region, it is possible to display a menu screen for the analog broadcast or the digital broadcast in correspondence with the broadcast scheme of the region after the change.

By the way, in the foregoing embodiment, the broadcast scheme information is stored in the storing section 22 beforehand, and the selection of any one of the analog broadcast mode and the digital broadcast mode is made using this information. Thus, starting the digital broadcast without updating the stored broadcast scheme information prevents the menu screen for digital broadcast from being displayed.

For this reason, when the digital broadcast is started in a receiving region which can be selected on the menu screen, it is possible to display the digital broadcast menu screen by connecting, for example, a tool 40 to the control section 20 and update the broadcast scheme information stored in the storing section 22. Alternatively, the broadcast scheme information may be updated by the user manipulation.

Further, when the digital broadcast is started, it is also possible for the broadcast-receiving device to automatically select the digital broadcast mode to display the digital broadcast menu screen. As a method for automatically switching the modes, it is possible to employ a method where information indicative of the period in which the digital broadcast is started and/or the period in which the analog broadcast is terminated are included in the broadcast scheme information, and based on this information, the mode is switched. Alternatively, it is also possible to employ a method where whether or not digital broadcast is receivable is determined and when the digital broadcast is determined as being receivable, the mode is switched. Still alternatively, it is also possible to employ a method where the start information indicative of the start of the digital broadcast is transmitted using, for example, a broadcast signal together with update data of the software, and the modes are switched based on the start information obtained by receiving this broadcast signal.

In the case where the period in which digital broadcast starts and/or the period in which the analog broadcast terminates are included in the broadcast scheme information, the control section 20 determines whether or not the digital broadcast starts and/or the analog broadcast has elapsed when the operation thereof starts. When the analog broadcast has elapsed, the digital broadcast mode is fixed. In this manner, the analog broadcast mode can be automatically switched to the digital broadcast mode without using the tool 40 and the user manipulation when the digital broadcast starts. Then, the digital broadcast menu screen can be displayed.

In the case where the control section 20 determines whether or not the digital broadcast is receivable, the control section 20 controls the broadcast-receiving section 12 to receive the digital broadcast. Then, the control section 20 periodically determines whether or not the digital broadcast has been successfully received, based on the presence or absence of the output of the base band IQ signal Sd from the tuner 121 and the output of the transport stream TS from the demodulating section 123. At this time, when the base IQ signal Sd or the transport stream TS has been output and the control section 20 determines that the digital broadcast is successfully received, the control section 20 fixes the broadcast-receiving device 10 to its digital broadcast mode. In this manner, when the broadcast scheme information is stored into the storing section 22, even if the period in which the digital broadcast will start or the period in which the analog broadcast will terminate is indefinite, the analog broadcast mode can be automatically switched into the digital broadcast mode when the transmission of the digital broadcast signal starts. This enables to be displayed the digital broadcast menu screen.

In the case where the start information indicative of the start of the digital broadcast is transmitted by a broadcast signal and the like, the control section 20 switches the broadcast mode into the digital broadcast mode based on the start information that the control section 20 has received. In this manner, even if the period in which the digital broadcast will start or the period in which the analog broadcast will terminate is unknown when the broadcast scheme information is stored into the storing section 22, the analog broadcast mode can be automatically switched into the digital broadcast mode. Further, even if a test digital broadcast signal has been transmitted before the actual digital broadcast starts, the switching into the digital broadcast mode by the test digital broadcast signal can be prevented.

By the way, before the digital broadcast starts, a period of transition from the analog broadcast to the digital broadcast is generally prepared. During this period of transition, there are some cases where simultaneous broadcast including the analog broadcast and the digital broadcast is distributed. In such cases, the broadcast-receiving device 10 can display images of the broadcast contents regardless of whether the analog broadcast has been received or the digital broadcast has been received. Thus, the broadcast-receiving device 10 can chooses a simultaneous broadcast mode. In this mode, the operation is set in such a manner that the broadcast-receiving section 12 and the image-processing section 15 are controlled in correspondence with both of the analog broadcast and the digital broadcast. With the simultaneous broadcast mode provided as described above, it is possible to display a menu screen suitable for receiving both of the analog broadcast and the digital broadcast.

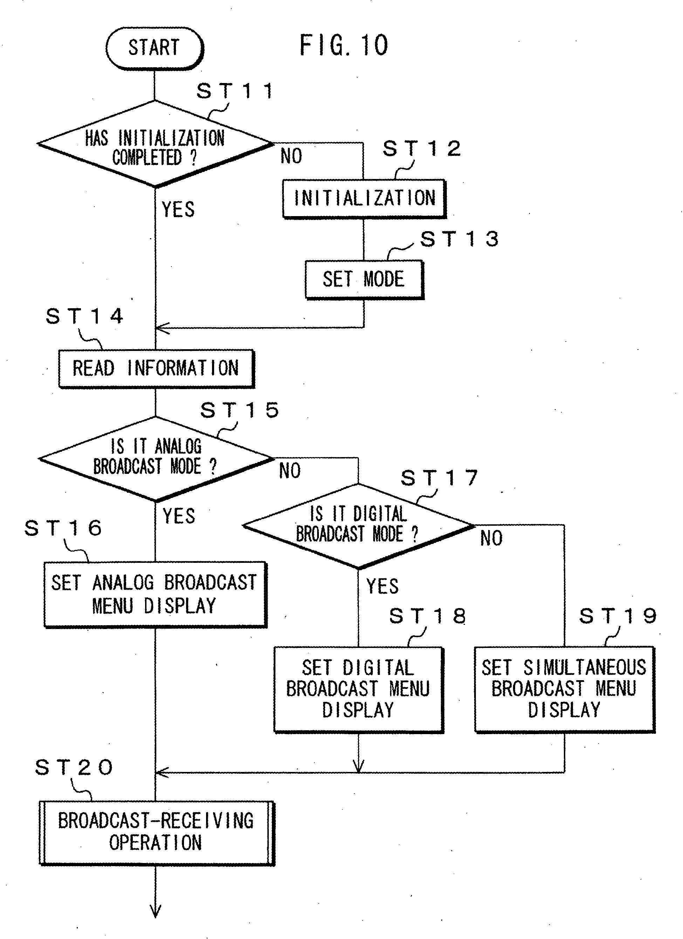

Fig. 10 is a flow chart for illustrating operations of setting the menu display when the simultaneous broadcast mode is provided. In Step ST11, the control section 20 determines whether or not the initialization of the broadcast-receiving device 10 has already been completed. If the initialization has not been completed yet, the control section 20 proceeds to Step ST12 where it executes the initialization. If the initialization has already been completed, the control section 20 proceeds to Step ST14.

In Step ST12, the control section 20 executes the initialization in the same manner as the Step ST2. In Step ST13, the control section 2 0 controls the broadcast-receiving section 12 and the image-processing section 15 to allow the broadcast-receiving device 10 to choose among an analog broadcast mode, a digital broadcast mode, and a simultaneous broadcast mode in which the operation is set in correspondence with both of the analog broadcast and the digital broadcast. Then, the control section 20 controls the storing section 22 to store the result of the choice. It is to be noted that the simultaneous broadcast mode can be chosen only during the transition period. During the transition period, it may be possible to choose among the analog broadcast mode, the digital broadcast mode, and the simultaneous broadcast mode by the user manipulation. Alternatively, during the transition period, the simultaneous broadcast mode may be automatically chosen.

If the information indicative of the period in which the digital broadcast starts and the period in which the analog broadcast terminates is included in the broadcast scheme information, whether or not being in the transition period can be automatically determined using this broadcast scheme information. Alternatively, a termination of the analog broadcast and a start of the digital broadcast may be separately determined. In this case, the start of the digital broadcast can be determined based on whether or not the base band IQ signal Sd or the transport stream TS is output. The termination of the analog broadcast can be determined based on whether or not the intermediate frequency signal IF or the image signal Va is output. Further, in the case where the start signal indicative of the start of the digital broadcast is transmitted by a broadcast signal and the like, if the termination signal indicative of the termination of the analog broadcast is also transmitted by a broadcast signal and the like, whether or not being in the transition period can be automatically determined.

In Step ST14, the control section 20 reads the information stored in the storing section 22, and proceeds to Step ST15. In the StepST15, the control section 20 determines based on the read information whether or not the analog broadcast mode has been selected. When the analog broadcast mode has been selected, the control section 20 proceeds to Step ST16. Contrarily, when the analog broadcast mode has not been selected, the control section 20 proceeds to Step ST17.

In Step ST16, the control section 20 controls the broadcast-receiving section 12 and the image-processing section 15 to set the analog broadcast menu display in such a manner that any menu display corresponding to the analog broadcast mode can appear. Then, the control section 20 proceeds to Step ST20.

In Step ST17, the control section 20 determines based on the read information whether or not the digital broadcast mode has been selected. When the digital broadcast mode has been selected, the control section 20 proceeds to Step ST18. Contrarily, when the digital broadcast mode has not been selected, that is, when the simultaneous broadcast mode has been selected, the control section 20 proceeds to Step ST19.

In the Step ST18, the control section 20 controls the broadcast-receiving section 12 and the image-processing section 15 to set the broadcast menu display in such a manner that the menu display corresponding to the digital broadcast mode can appear. Then, the control section 20 proceeds to the Step ST20. In Step ST19, the control section 20 controls the broadcast-receiving section 12 and the image-processing section 15 to set the simultaneous broadcast menu display in such a manner that the menu display corresponding to the simultaneous broadcast mode can appear. Then, the control section 20 proceeds to the Step ST20.

In the Step ST20, the control section 20 controls the broadcast-receiving section 12 and the image-processing section 15 to execute any broadcast receiving operations to display the images of the broadcast contents designated by the user on the display section 16. In these broadcast receiving operations, in the case where the simultaneous broadcast mode has been selected, the control section 20 controls the broadcast-receiving section 12 and the image-processing section 15 to set their operations in correspondence with the analog broadcast and the digital broadcast. For example, when the user manipulates the channel button 314 of the remote controller 30, the control section 20 enables the analog broadcast programs and the digital broadcast programs to be sequentially selectable.

In these broadcast-receiving operations, when the user manipulates menu display, for example, the menu button 316 of the remote controller 30, a menu screen corresponding to the menu display setting can appear.

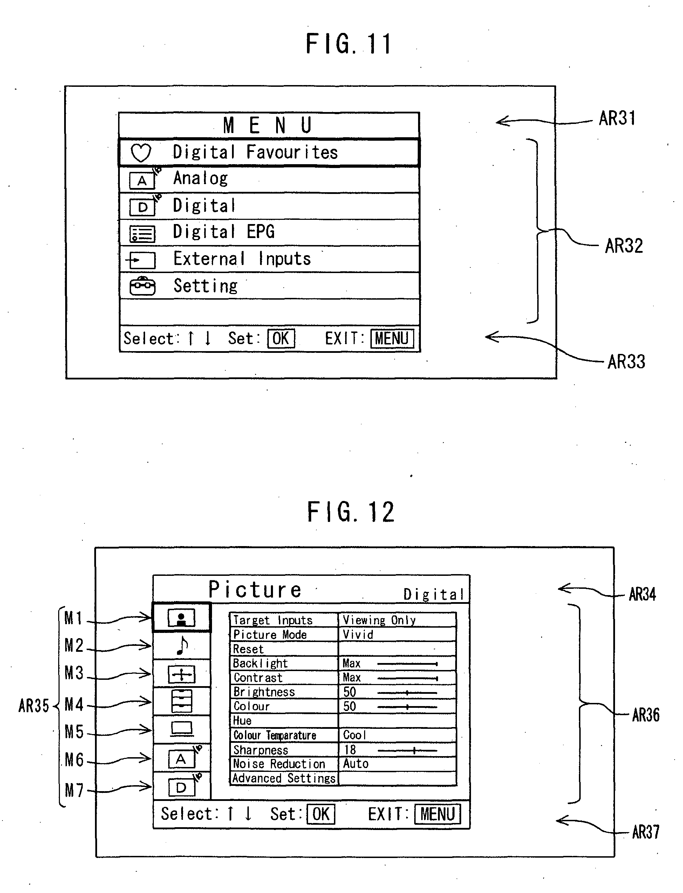

Fig. 11 shows a top menu screen displayed in the case where the simultaneous broadcast mode is selected. On the top menu screen, a title of the menu is displayed in a display area AR31, menu items are displayed in a display area AR32, and manipulation methods are displayed in a display area AR33. Further, the menu items display items related to the reception of the analog broadcast and that of the digital broadcast. For example, "Digital Favorites" is a menu item for displaying the favorite digital broadcast channel list. "Analogue" is a menu item for selecting an analog broadcast channel, whereas "Digital" is a menu item for selecting a digital broadcast channel. "Digital EPG" is a menu item for displaying an electronic program guide of the digital broadcast. "External Inputs" is a menu item for selecting the image signal inputted from the external input terminals 14 by the selector 13. "Setting" is a menu item for allowing a setting menu screen for making various settings to be displayed.

Fig. 12 shows a setting menu screen in the case where the simultaneous broadcast mode is selected. On the setting menu screen, a title of the menu is displayed in a display area AR34, menu items are displayed in a display area AR35, various setting details of the selected menu items are displayed in a display area AR36, and manipulation methods are displayed in a display area AR37. Further, items related to the matters other than the broadcast reception and items related to the analog broadcast reception and the digital broadcast reception are displayed as the menu items. For example, the menu items M1 to M5 are items related to the matters other than the broadcast reception as described above. The menu itemM6 is an item for selecting an analog broadcast setting screen for making analog broadcast channel setting, and the menu item M7 is an item for selecting a digital broadcast setting screen for making digital broadcast channel settings, and the like.

As described above, providing the simultaneous broadcast mode allow the user who intends to enjoy both of the analog broadcast and the digital broadcast to make settings or the like in correspondence with the respective broadcasts on the menu screen by selecting the simultaneous broadcast mode. This enables the broadcast-receiving device to enhance its operability.

When the transition period has terminated, the broadcast mode is automatically switched to the digital broadcast mode, so that it is possible to prevent the menu items related to the terminated broadcast from being displayed after it has terminated.

It should be understood by those skilled in the art that various modifications, combinations, sub-combinations and alternations may occur depending on design requirements and other factors insofar as they are within the scope of the appended claims.

## Claims

1. Broadcast-receiving device comprising:
a broadcast-receiving section (12) for receiving analog and digital broadcast signals (RF) and generating analog and digital image signals (Vd, Vs) on broadcast contents;
an image-processing section (15) for converting and adjusting the analog and digital image signals (Vd, Vs) and generating a menu signal for displaying an analog broadcast menu (AR14; AR8) having menu items (M1..M6) for setting operations of the broadcast-receiving section (12) and the image-processing section (15) related to reception of the analog broadcast signals (RF) and for displaying a digital broadcast menu (AR18; AR11) having menu items (M1..M5, M7) for setting operations of the broadcast-receiving section. (12) and the image-processing section (15) related to reception of the digital broadcast signals (RF); and
a control section (20) for controlling operations of the broadcast-receiving section (12) and the image-processing section (15),
**characterized by**
a storing section (22) for storing broadcast scheme information indicating, for each receiving region, whether received broadcast signals are analog broadcast signals, digital broadcast signals, or analog and digital broadcast signals, wherein
the control section (20) is adapted to determine (ST2) the receiving region and is adapted to set (ST15, ST17), based on the broadcast scheme information and the determined receiving region, an analog broadcast mode in which operations of the broadcast-receiving section (12) and the image-processing section (15) are controlled to be set in correspondence with the analog broadcast signal, a digital broadcast mode in which operations of the broadcast-receiving section (12) and the image-processing section (15) are controlled to be set in correspondence with the digital broadcast signal, or a simultaneous broadcast mode in which operations of the broadcast-receiving section (12) and the image-processing section (15) are controlled in correspondence with both of the analog broadcast signal and the digital broadcast signal; and
the image-processing section (15) is adapted to generate, when the analog broadcast mode is set by the control section (20), the menu signal for displaying the analog broadcast menu (AR8; AR14) in which menu items (M7) related to the reception of the digital broadcast signals are not displayed, is adapted to generate, when the digital broadcast mode is set by the control section (20), the menu signal for displaying the digital broadcast menu (AR11; AR18) in which menu items (M6) related to the reception of the analog broadcast signals are not displayed, and is adapted to generate, when the simultaneous broadcast mode is set by the control section (20), the menu signal for displaying a simultaneous broadcast menu (AR32; AR35) having menu items (M1..M7) for setting operations of the broadcast-receiving section (12) and the image-processing section (15) related to the reception of the analog and digital broadcast signals (RF).

2. The broadcast-receiving device according to claim 1 further comprising:
a user interface section (21) for generating, in response to user manipulation, a manipulation signal to set the receiving region.

3. The broadcast-receiving device according to claim 1 or 2, wherein
the broadcast scheme information includes time information indicative of time on which the digital broadcast starts and/or time on which the analog broadcast terminates; and wherein
the control section (20) is adapted to set the broadcast mode to the digital broadcast mode when the time on which the digital broadcast starts or the time on which the analog broadcast terminates has elapsed.

4. The broadcast-receiving device according to claim 1, 2 or 3, wherein
the control section (20) is adapted to set the broadcast mode to the digital broadcast mode when the broadcast-receiving section (12) receives the digital broadcast signal.

5. The broadcast-receiving device according to anyone of claims 1 to 4, wherein
the control section (20) is adapted to set the broadcast mode to the digital broadcast mode when information obtained by receiving the digital broadcast signal includes time information indicative of time on which the digital broadcast starts.

6. The broadcast-receiving device according to anyone of claims 1 to 5, wherein
the image-processing section (15) is adapted to generate, when the analog broadcast mode is set by the control section (20), the menu signal for displaying the analog broadcast menu (AR8; AR14) having a menu item (M6) for selecting an analog broadcast setting screen for making analog broadcast channel setting, is adapted to generate, when the digital broadcast mode is set by the control section (20), the menu signal for displaying the digital broadcast menu (AR8; AR14) having a menu item (M7) for selecting a digital broadcast setting screen for making digital broadcast channel setting, and is adapted to generate, when the simultaneous broadcast mode is set by the control section (20), the menu signal for displaying the simultaneous broadcast menu (AR8; AR14) having the menu item (M6) for selecting the analog broadcast setting screen for making analog broadcast channel setting and the menu item (M7) for selecting the digital broadcast setting screen for making digital broadcast channel setting.

7. A method for displaying a menu on broadcast-receiving device having a broadcast-receiving section (12) for receiving analog and digital broadcast signals (RF) and generating analog and digital image signals (Vd, Vs) on broadcast contents and an image-processing section (15) for converting and adjusting the analog and digital image signals (Vd, Vs), said method comprising the steps of:
generating (15) a menu signal for displaying an analog broadcast menu (AR14; AR8) having menu items (M1..M6) for setting operations of the broadcast-receiving section (12) and the image-processing section (15) related to reception of the analog broadcast signals (RF) and for displaying a digital broadcast menu (AR18; AR11) having menu items (M1..M5, M7) for setting operations of the broadcast-receiving section (12) and the image-processing section (15) related to reception of the digital broadcast signals (RF); and
displaying (20) a menu screen in correspondence with the generated menu signal,
**characterized by** the steps of:
storing (ST2, 22) broadcast scheme information indicating, for each receiving region, whether received broadcast signals are analog broadcast signals, digital broadcast signals, or analog and digital broadcast signals;
determining (ST2, 20) the receiving region; and
choosing (ST15, ST17), based on the broadcast scheme information and the determined receiving region, an analog broadcast mode in which operations of the broadcast-receiving section (12) and the image-processing section (15) are controlled to be set in correspondence with the analog broadcast signal, a digital broadcast mode in which operations of the broadcast-receiving section (12) and the image-processing section (15) are controlled to be set in correspondence with the digital broadcast signal, or a simultaneous broadcast mode in which operations of the broadcast-receiving section (12) and the image-processing section (15) are controlled in correspondence with both of the analog broadcast signal and the digital broadcast signal; wherein
in said generating step (15), the menu signal for displaying the analog broadcast menu (AR8; AR14) in which menu items (M7) related to the reception of the digital broadcast signals are not displayed is generated when the analog broadcast mode is chosen, the menu signal for displaying the digital broadcast menu (AR11; AR18) in which menu items (M6) related to the reception of the analog broadcast signals are not displayed is generated when the digital broadcast mode is chosen, and the menu signal for displaying a simultaneous broadcast menu (AR32; AR35) having menu items (M1..M7) for setting operations of the broadcast-receiving section (12) and the image-processing section (15) related to the reception of the analog and digital broadcast signals (RF) is generated when the simultaneous broadcast mode is chosen.

## Patentansprüche

1. Rundfunkempfangsgerät, welches aufweist:
ein Rundfunkempfangsteil (12) zum Empfang analoger und digitaler Rundfunksignale (RF) und zur Erzeugung analoger und digitaler Bildsignale (Vd, Vs) bezüglich Rundfunkinhalten.
ein Bildverarbeitungsteil (15) zur Umsetzung und Anpassung der analogen und digitalen Bildsignale (Vd, Vs) und zur Erzeugung eines Menüsignals zur Darstellung eines analogen Rundfunkmenüs (AR14; AR8) mit Menüpunkten (M1..M6) zum Einstellen von Betrieben des Rundfunkempfangsteils (12) und des Bildverarbeitungsteils (15) bezüglich des Empfangs der analogen Rundfunksignale (RF) und zur Darstellung eines digitalen Rundfunkmenüs (AR18; A-R11) mit Menüpunkten (M1..M5, M7) zum Einstellen von Betrieben des Rundfunkempfangsteils (12) und des Bildverarbeitungsteils (15) bezüglich des Empfangs der digitalen Rundfunksignale (RF); und
ein Steuerteil (20) zur Steuerung von Operationen des Rundfunkempfangsteils (12) und des Bildverarbeitungsteils (15),
**gekennzeichnet durch**
ein Speicherteil (22) zum Speichern von Rundfunkprogramminformationen, welche für jede Empfangsregion angeben, ob die empfangenen Rundfunksignale analoge, digitale oder sowohl analoge wie digitale Rundfunksignale sind, wobei
das Steuerteil (20) die Empfangsregion ermitteln (ST2) und anhand der Rundfunkprogramminformationen und der ermittelten Empfangsregion einen analogen Rundfunkmodus, in dem die Einstellung von Betrieben des Rundfunkempfangsteils (12) und des Bildverarbeitungsteils (15) gemäß dem analogen Rundfunksignal gesteuert wird, einen digitalen Rundfunkmodus, in dem die Einstellung von Betrieben des Rundfunkempfangsteils (12) und des Bildverarbeitungsteils (15) gemäß dem digitalen Rundfunksignal gesteuert wird, oder einen simultanen Rundfunkmodus einstellen (ST 17) kann, in dem die Einstellung von Betrieben des Rundfunkempfangsteils (12) und des Bildverarbeitungsteils (15) sowohl gemäß dem analogen Rundfunksignal als auch dem digitalen Rundfunksignal gesteuert wird, und
das Bildverarbeitungsteil (15) nach Einstellung des analogen Rundfunkmodus **durch** das Steuerteil (20) das Menüsignal zur Darstellung des analogen Rundfunkmenüs (AR8; AR14), in dem Menüpunkte (M7) bezüglich des Empfangs digitaler Rundfunksignale nicht erscheinen, nach Einstellung des digitalen Rundfunkmodus **durch** das Steuerteil (20) das Menüsignal zur Darstellung des digitalen Rundfunkmenüs (AR11; AR18), in dem Menüpunkte (M6) bezüglich des Empfangs der analogen Rundfunksignale nicht erscheinen, sowie nach Einstellung des simultanen Rundfunkmodus **durch** das Steuerteil (20) das Menüsignal zur Darstellung eines simultanen Rundfunkmenüs (AR32; AR35) mit Menüpunkten (M1..M7) erzeugen kann, über welche die Betriebe des Rundfunkempfangsteils (12) und des Bildverarbeitungsteils (15) bezüglich des Empfangs der analogen und digitalen Rundfunksignale (RF) eingestellt werden.

2. Rundfunkempfangsgerät nach Anspruch 1, welches weiterhin aufweist:
ein Nutzerschnittstellenteil (21), welches nach Betätigen durch den Nutzer ein Betätigungssignal zum Einstellen der Empfangsregion erzeugt.

3. Rundfunkempfangsgerät nach Anspruch 1 oder 2, wobei
die Rundfunkprogramminformationen Zeitinformationen enthalten, welche die Zeit angeben, zu der die digitale Rundfunkübertragung beginnt und/oder die analoge Rundfunkübertragung endet; und wobei
das Steuerteil (20) den Rundfunkmodus auf digitalen Rundfunkmodus einstellen kann, wenn die digitale Rundfunkübertragung beginnt oder die Zeit abgelaufen ist, zu der die analoge Rundfunkübertragung endet.

4. Rundfunkempfangsgerät nach Anspruch 1, 2 oder 3, wobei
das Steuerteil (20) den Rundfunkmodus auf digitalen Rundfunkmodus einstellen kann, wenn das Rundfunkempfangsteil (12) das digitale Rundfunksignal empfängt.

5. Rundfunkempfangsgerät nach einem der Ansprüche 1 bis 4, wobei
das Steuerteil (20) den Rundfunkmodus auf digitalen Rundfunkmodus einstellen kann, wenn die beim Empfang des digitalen Rundfunksignals erhaltenen Informationen Zeitinformationen enthalten, welche die Zeit angeben, zu der die digitale Rundfunkübertragung beginnt.

6. Rundfunkempfangsgerät nach einem der Ansprüche 1 bis 5, wobei
das Bildverarbeitungsteil (15) nach Einstellung des analogen Rundfunkmodus durch das Steuerteil (20) das Menüsignal zur Darstellung des analogen Rundfunkmenüs (AR8; AR14) mit einem Menüpunkt (M6) zur Auswahl eines analogen Rundfunkeinstellbildschirms zum Einstellen eines analogen Rundfunkkanals, nach Einstellung des digitalen Rundfunkmodus durch das Steuerteil (20) das Menüsignal zur Darstellung des digitalen Rundfunkmenüs (AR8; AR14) mit einem Menüpunkt (M7) zur Auswahl eines digitalen Rundfunkeinstellbildschirms zum Einstellen eines digitalen Rundfunkkanals sowie nach Einstellung des simultanen Rundfunkmodus durch das Steuerteil (20) das Menüsignal zur Darstellung des simultanen Rundfunkmenüs (AR8; AR14) mit dem Menüpunkt (M6) zur Auswahl des analogen Rundfunkeinstellbildschirms zum Einstellen eines analogen Rundfunkkanals und dem Menüpunkt (M7) zur Auswahl des digitalen Rundfunkeinstellbildschirms zum Einstellen eines digitalen Rundfunkkanals erzeugen kann.

7. Verfahren für die Darstellung eines Menüs auf einem Rundfunkempfangsgerät mit einem ein Rundfunkempfangsteil (12) zum Empfang analoger und digitaler Rundfunksignale (RF) und zur Erzeugung analoger und digitaler Bildsignale (Vd, Vs) bezüglich Rundfunkinhalten sowie einem Bildverarbeitungsteil (15) zur Umsetzung und Anpassung der analogen und digitalen Bildsignale (Vd, Vs), wobei das Verfahren folgende Schritte aufweist:
Erzeugen (15) eines Menüsignals zur Darstellung eines analogen Rundfunkmenüs (AR14; AR8) mit Menüpunkten (M1..M6) zum Einstellen von Betrieben des Rundfunkempfangsteils (12) und des Bildverarbeitungsteils (15) bezüglich des Empfangs der analogen Rundfunksignale (RF) und zur Darstellung eines digitalen Rundfunkmenüs (AR18; AR11) mit Menüpunkten (M1..M5, M7) zum Einstellen von Betrieben des Rundfunkempfangsteils (12) und des Bildverarbeitungsteils (15) bezüglich des Empfangs der digitalen Rundfunksignale (RF); und
Darstellen (20) eines Menübildschirms gemäß dem erzeugten Menüsignal, **gekennzeichnet durch** folgende Schritte:
Speichern (ST2, 22) von Rundfunkprogramminformationen, welche für jede Region angeben, ob die empfangenen Rundfunksignale analoge, digitale oder sowohl analoge wie digitale Rundfunksignale sind, und
Auswahl (ST15, ST17) anhand der Rundfunkprogramminformationen und der ermittelten Empfangsregion eines analogen Rundfunkmodus, in dem die Einstellung von Betrieben des Rundfunkempfangsteils (12) und des Bildverarbeitungsteils (15) gemäß dem analogen Rundfunksignal gesteuert wird, eines digitalen Rundfunkmodus, in dem die Einstellung von Betrieben des Rundfunkempfangsteils (12) und des Bildverarbeitungsteils (15) gemäß dem digitalen Rundfunksignal gesteuert wird, oder eines simultanen Rundfunkmodus, in dem die Einstellung von Betrieben des Rundfunkempfangsteils (12) und des Bildverarbeitungsteils (15) sowohl gemäß dem analogen als auch dem digitalen Rundfunksignal gesteuert wird, wobei
im Schritt der Erzeugung (15) nach Auswahl des analogen Rundfunkmodus das Menüsignal zur Darstellung des analogen Rundfunkmenüs (AR8; AR14), in welchem Menüpunkte (M7) bezüglich des Empfangs digitaler Rundfunksignale nicht erscheinen, nach Auswahl des digitalen Rundfunkmodus das Menüsignal zur Darstellung des digitalen Rundfunkmenüs (AR11; AR18), in welchem Menüpunkte (M6) bezüglich des Empfangs der analogen Rundfunksignale nicht erscheinen, sowie nach Auswahl des simultanen Rundfunkmodus das Menüsignal zur Darstellung eines simultanen undfunkmenüs (AR32; AR35) mit Menüpunkten (M1..M7) erzeugt wird, über welche die Betrieben des Rundfunkempfangsteils (12) und des Bildverarbeitungsteils (15) bezüglich des Empfangs der analogen und digitalen Rundfunksignale (RF) eingestellt werden.

## Revendications

1. Dispositif de réception de diffusion comprenant :
une section de réception de diffusion (12) pour recevoir des signaux de diffusion analogiques et numériques (RF) et générer des signaux d'image analogiques et numériques (Vd, Vs) sur un contenu de diffusion ;
une section de traitement d'image (15) pour convertir et régler les signaux d'image analogiques et numériques (Vd, Vs) et générer un signal de menu pour afficher un menu de diffusion analogique (AR14; AR8) comportant des éléments de menu (M1..M6) pour paramétrer les opérations de la section de réception de diffusion (12) et de la section de traitement d'image (15), relatives à la réception des signaux de diffusion analogiques (RF) et pour afficher un menu de diffusion numérique (AR18; AR11) comportant des éléments de menu (M1..M5, M7) pour paramétrer les opérations de la section de réception de diffusion (12) et de la section de traitement d'image (15), relatives à la réception des signaux de diffusion numériques (RF) ; et
une section de commande (20) pour commander les opérations de la section de réception de diffusion (12) et de la section de traitement d'images (15),
**caractérisé par**
une section de mémorisation (22) pour mémoriser des informations de configuration de diffusion, pour chaque région de réception, selon que les signaux de diffusion reçus sont des signaux de diffusion analogiques, des signaux de diffusion numériques ou des signaux de diffusion analogiques et numériques, dans lequel
la section de commande (20) est adaptée à déterminer (ST2) la région de réception et est adaptée à paramétrer (ST15, ST17), en se basant sur les informations de configuration de diffusion et sur la région de réception déterminée, un mode de diffusion analogique dans lequel les opérations de la section de réception de diffusion (12) et de la section de traitement d'image (15) sont commandées pour être paramétrées en correspondance avec le signal de diffusion analogique, un mode de diffusion numérique dans lequel les opérations de la section de réception de diffusion (12) et de la section de traitement d'image (15) sont commandées pour être paramétrées en correspondance avec le signal de diffusion numérique, ou un mode de diffusion simultanée dans lequel les opérations de la section de réception de diffusion (12) et de la section de traitement d'image (15) sont commandées en correspondance à la fois avec le signal de diffusion analogique et le signal de diffusion numérique ; et
la section de traitement d'image (15) est adaptée à générer, lorsque le mode de diffusion analogique est paramétré par la section de commande (20), le signal de menu pour afficher le menu de diffusion analogique (AR8; AR14) dans lequel les éléments de menu (M7) relatifs à la réception des signaux de diffusion numériques ne sont pas affichés, est adaptée à générer, lorsque le mode de diffusion numérique est paramétré par la section de commande (20), le signal de menu pour afficher le menu de diffusion numérique (AR11; AR18) dans lequel les éléments de menu (M6) relatifs à la réception des signaux de diffusion analogiques ne sont pas affichés, et est adaptée à générer, lorsque le mode de diffusion simultanée est paramétré par la section de commande (20), le signal de menu pour afficher un menu de diffusion simultanée (AR32; AR35) comportant des éléments de menu (M1..M7) pour paramétrer les opérations de la section de réception de diffusion (12) et de la section de traitement d'image (15) relatives à la réception des signaux de diffusion analogiques et numériques (RF).

2. Dispositif de réception de diffusion selon la revendication 1, comprenant en outre :
une section d'interface utilisateur (21) pour générer, en réponse à une manipulation de l'utilisateur, un signal de manipulation pour paramétrer la région de réception.

3. Dispositif de réception de diffusion selon la revendication 1 ou 2, dans lequel
les informations de configuration de diffusion comportent des informations horaires indiquant l'heure à laquelle démarre la diffusion numérique et/ou l'heure à laquelle se termine la diffusion analogique ; et dans lequel
la section de commande (20) est adaptée à paramétrer le mode de diffusion dans le mode de diffusion numérique lorsque l'heure à laquelle démarre la diffusion numérique ou l'heure à laquelle se termine la diffusion analogique est arrivée.

4. Dispositif de réception de diffusion selon la revendication 1, 2 ou 3, dans lequel
la section de commande (20) est adaptée à paramétrer le mode de diffusion dans le mode de diffusion numérique lorsque la section de réception de diffusion (12) reçoit le signal de diffusion numérique.

5. Dispositif de réception de diffusion selon l'une quelconque des revendications 1 à 4, dans lequel
la section de commande (20) est adaptée à paramétrer le mode de diffusion dans le mode de diffusion numérique lorsque les informations obtenues en recevant le signal de diffusion numérique comportent des informations horaires indiquant l'heure à laquelle démarre la diffusion numérique.

6. Dispositif de réception de diffusion selon l'une quelconque des revendications 1 à 5, dans lequel
la section de traitement d'image (15) est adaptée à générer, lorsque le mode de diffusion analogique est paramétré par la section de commande (20), le signal de menu pour afficher le menu de diffusion analogique (AR8; AR14) comportant un élément de menu (M6) pour sélectionner un écran de paramétrage de diffusion analogique pour effectuer le paramétrage du canal de diffusion analogique, est adaptée à générer, lorsque le mode de diffusion numérique est paramétré par la section de commande (20), le signal de menu pour afficher le menu de diffusion numérique (AR8; AR14) comportant un élément de menu (M7) pour sélectionner un écran de paramétrage de diffusion numérique pour effectuer le paramétrage du canal de diffusion numérique, et est adaptée à générer, lorsque le mode de diffusion simultanée est paramétré par la section de commande (20), le signal de menu pour afficher le menu de diffusion simultanée (AR8; AR14) comportant l'élément de menu (M6) pour sélectionner l'écran de paramétrage de diffusion analogique pour effectuer le paramétrage du canal de diffusion analogique et l'élément de menu (M7) pour sélectionner l'écran de paramétrage de diffusion numérique pour effectuer le paramétrage du canal de diffusion numérique.

7. Procédé d'affichage d'un menu sur un dispositif de réception de diffusion comportant une section de réception de diffusion (12) pour recevoir des signaux de diffusion analogiques et numériques (RF) et générer des signaux d'image analogiques et numériques (Vd, Vs) sur un contenu de diffusion et une section de traitement d'image (15) pour convertir et régler les signaux d'image analogiques et numériques (Vd, Vs), ledit procédé comprenant les étapes consistant à :
générer (15) un signal de menu pour afficher un menu de diffusion analogique (AR14; AR8) comportant des éléments de menu (M1..M6) pour paramétrer les opérations de la section de réception de diffusion (12) et la section de traitement d'image (15), relatives à la réception des signaux de diffusion analogiques (RF) et pour afficher un menu de diffusion numérique (AR18; AR11) comportant des éléments de menu (M1..M5, M7) pour paramétrer les opérations de la section de réception de diffusion (12) et la section de traitement d'image (15), relatives à la réception des signaux de diffusion numériques (RF) ; et
afficher (20) un écran de menu en correspondance avec le signal de menu généré,
**caractérisé par** les étapes consistant à :
mémoriser (ST2, 22) des informations de configuration de diffusion indiquant pour chaque région de réception, si les signaux de diffusion reçus sont des signaux de diffusion analogiques, des signaux de diffusion numériques ou des signaux de diffusion analogiques et numériques ;
déterminer (ST2, 20) la région de réception ; et
choisir (ST15, ST17), en se basant sur les informations de configuration de diffusion et la région de réception déterminée, un mode de diffusion analogique dans lequel les opérations de la section de réception de diffusion (12) et de la section de traitement d'image (15) sont commandées pour être paramétrées en correspondance avec le signal de diffusion analogique, un mode de diffusion numérique dans lequel les opérations de la section de réception de diffusion (12) et de la section de traitement d'image (15) sont commandées pour être paramétrées en correspondance avec le signal de diffusion numérique, ou un mode de diffusion simultanée dans lequel les opérations de la section de réception de diffusion (12) et de la section de traitement d'image (15) sont commandées en correspondance à la fois avec le signal de diffusion analogique et le signal de diffusion numérique ; dans lequel
à ladite étape de génération (15), le signal de menu pour afficher le menu de diffusion analogique (AR8; AR14) dans lequel les éléments de menu (M7) relatifs à la réception des signaux de diffusion numériques ne sont pas affichés, est généré, lorsque le mode de diffusion analogique est choisi, le signal de menu pour afficher le menu de diffusion numérique (AR11; AR18) dans lequel les éléments de menu (M6) relatifs à la réception des signaux de diffusion analogiques ne sont pas affichés, est généré, lorsque le mode de diffusion numérique est choisi et le signal de menu pour afficher un menu de diffusion simultanée (AR32; AR35) comportant des éléments de menu (M1..M7) pour paramétrer les opérations de la section de réception de diffusion (12) et de la section de traitement d'image (15) relatives à la réception des signaux de diffusion analogiques et numériques (RF) est généré lorsque le mode de diffusion simultanée est choisi.
